Europäisches Patentamt

European Patent Office

Office européen des brevets

(11) Publication number: **0012555**
A1

(19)

(12) **EUROPEAN PATENT APPLICATION**

(21) Application number: **79302766.5**

(22) Date of filing: **03.12.79**

(51) Int. Cl.³: **H 02 K 19/20**, H 02 K 41/03

(30) Priority: **07.12.78 GB 4762778**

(43) Date of publication of application: **25.06.80**
**Bulletin 80/13**

(84) Designated Contracting States: **AT BE CH DE FR GB IT LU NL SE**

(71) Applicant: **KGEL LIMITED, Kennedy Tower St. Chads, Queensway, Birmingham, B4 6EL (GB)**

(72) Inventor: **Evans, Peter David, Glenholm, Sharpstone Freshford, Bath (GB)**
Inventor: **Eastham, John Frederick, Tunbridge House, Combe Down, Bath (GB)**

(74) Representative: **Freed, Arthur Woolf et al, MARKS & CLERK 57-60 Lincoln's Inn Fields, London WC2A 3LS (GB)**

(54) Homopolar synchronous machines.

(57) A homopolar synchronous machine has a slot (22) formed in the rotor (6) in a direction normal to the intended path through the rotor (6) of the flux produced by the stator winding current. The slot (22) reduces the armature reactance. A disc machine in accordance with the invention has a stator from which teeth project axially, a central boss (3) projecting axially in the same direction as the teeth and a rotor (6) which is generally rectangular and has a central aperture (8). The rotor (6) is mounted for rotation so that the boss (3) passes through the central aperture (8) and so that there is an air gap between the rotor (6) and the teeth. An A. C. winding is wound through the slots between the teeth and a D. C. winding surrounds the central boss (3). The slot (22) is formed so as to extend from the central aperture (8) in the direction parallel to the longitudinal direction of the rotor (6).

- 1 -

"HOMOPOLAR SYNCHRONOUS MACHINES"

This invention relates to homopolar synchronous machines with primary side excitation.

A synchronous machine normally has a wound stator and a rotor on which poles are formed often by windings which is energised with D.C. It is possible to reverse the functions of the stator and the rotor and it is also possible to provide a linear synchronous machine. However, in this specification the term stator will be applied to that member which carries the winding providing a rotating field and moreover the term stator and rotor will be used even to describe a linear machine which one member is fixed and the other moves linearly.

It is known that in almost all synchronous machines that the armature reactance should be minimised in order to obtain a high power output with good power factor and efficiency. A simple expression for power output shows this:-

$$P = \frac{EV}{X} \sin \delta$$

where

E = induced voltage

V = applied voltage

$\delta$ = load angle

X = armature reactance.

Consequently, the smaller X the larger P, other parameters being unchanged.

Alternators used to generate electricity are of course synchronous generators and in alternators as used in power stations low armature reactance is normally achieved by using a large air gap. This is, of course, an effective method of reducing armature reactance but, in the case of a machine with primary side excitation, it leads to some increase in the required D.C. excitation current to drive the flux across the enlarged air gap which is disadvantageous.

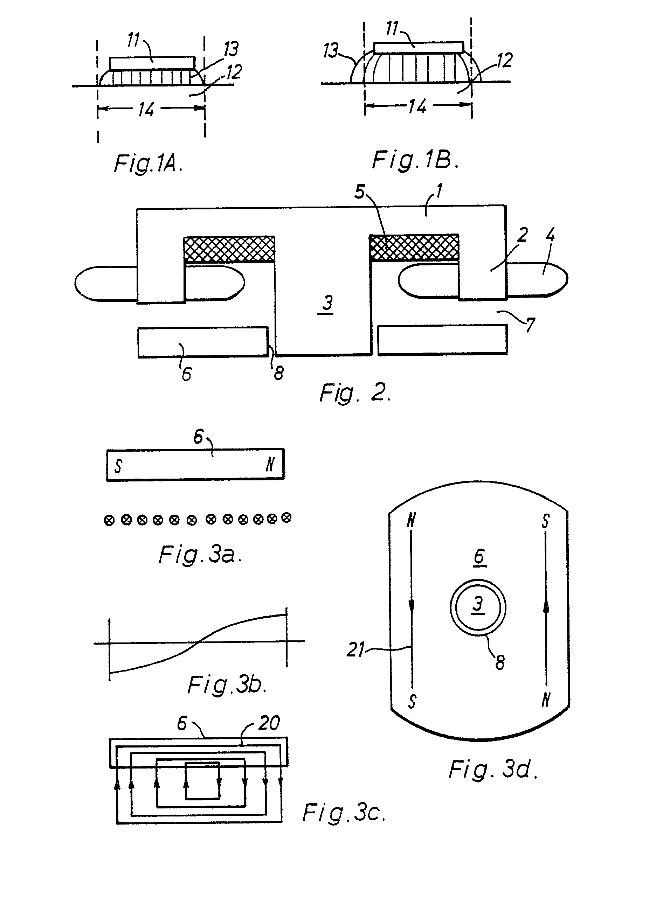

The use of a large air gap has an additional disadvantage in the case of a homopolar synchronous machine as opposed to a heteropolar synchronous machine in that fringe flux increases as the air gap increases and leads to a reduction in the induced voltage. This is illustrated in the accompanying drawings, in which Figure 1A shows a relatively small air gap and Figure 1B shows a relatively large air gap. In Figure 1A, the rotor pole is designated at 11, the stator at 12, the flux lines at 13 and the pole pitch at 14. It can be seen that in the case of a large air gap that fringe flux exists and produces voltages in the windings which are in the wrong sense and which effectively reduce the total voltage in the winding. This problem is of less significance in the case of a heteropolar machine because of the plane of symmetry which exists between two poles of the opposite sense. Consequently, the voltages induced because of the fringe flux cancel each other out and have relatively little affect.

It is proposed in French Patent No. 2 072 611 to provide the rotor of a reluctance machine with flux barriers but as a reluctance machine is not a homopolar machine nor does it have D.C. excitation a solution applicable to a reluctance machine would not normally be applicable to homopolar synchronous machine with primary side excitation.

It is an object of this invention to provide a homopolar synchronous machine which has primary side excitation and a relatively low armature reactance.

According to this invention such a synchronous machine is characterised in that a slot is formed in the rotor in a direction normal to the intended path through the rotor of the flux produced by the stator winding current.

The invention nearly doubled the power output of a particular homopolar synchronous machine by reducing the armature reactance.

The invention is applicable to a disc machine, a cylindrical machine or a linear machine.

Homopolar synchronous machines in accordance with this invention will now be described, by way of example only, with reference to the accompanying schematic drawings of which:

Figures 1A and 1B illustrate the effect on an increase in the air gap between the stator and rotor and have been referred to;

Figure 2 is a sectional elevation of a disc machine;

Figures 3a, 3b, 3c and 3d are aligned views showing one rotor pole and the adjacent stator windings, the m.m.f. pattern in the rotor pole, a flux path at the rotor pole, and a plan view of the rotor showing an undesired flux path, all relating to the disc machine of Figure 2.

Figure 4 is a plan view of the rotor of a disc machine in accordance with this invention;

Figure 5 is a partial sectional elevation of the disc machine whose rotor is shown in Figure 4;

Figure 6 illustrates a modification of the rotor shown in Figure 4;

Figure 7 illustrates another modification of the rotor shown in Figure 4;

Figure 8 shows some of the fixed "rotor" bars of a linear machine in accoreance with this invention; and

Figure 9 and 10 are respectively a schematic sectional elevation of a cylindrical machine in accordance with this invention and an end view of the rotor of the cylindrical machine.

Figure 2 shows a homopolar disc motor with primary side excitation having a stator consisting of an annulus of cylinder 1 from which teeth 2 project axially; a central boss 3 projects axially beyond the teeth 2. A bar-like rotor 6 with similar poles at its ends has a central aperture 8 by means of which it is rotatably mounted on the boss 3 and is positioned adjacent to the stator with an axial gap 7 between the rotor 6 and the teeth 2. The rotor 6 is magnetised by the D.C. winding 5 and as it has two similar poles at its ends the motor is a homopolar machine.

The intended flux path passes through the boss 3, through the gap between the boss 3 and the rotor 6, radially through the rotor 6, through the gap 7, through the teeth 2 and through the annulus 1 back to the boss 3. The shape of the rotor 6 is visible in Figure 3d.

Referring now to Figures 3a to 3d, Figure 3a is a partial side view of the motor showing one end pole of the rotor 6 and the adjacent path of the stator winding 4. It is assumed that the direction of current through all the conductors shown in Figure 3a is identical and the winding 4 does, of course, produce a rotating current pattern. Figure 3a therefore refers to the so-called q-axis position at which maximum torque is produced or absorbed by the machine. Figure 3b shows the MMF pattern, whereas Figure 3c shows a first unnecessary flux path 20 in which flux extends from one side of the rotor pole to the other side of the rotor pole creating the north and south poles shown by way of illustration in Figure 3a.  Figure 3d shows a second unncessary flux path 21 which flux extends from one end of the rotor 6 to the other without passing into the central boss 3.  These unnecessary flux paths do of course increase the reactance of the stator winding as the greater the flux the higher the reactance.

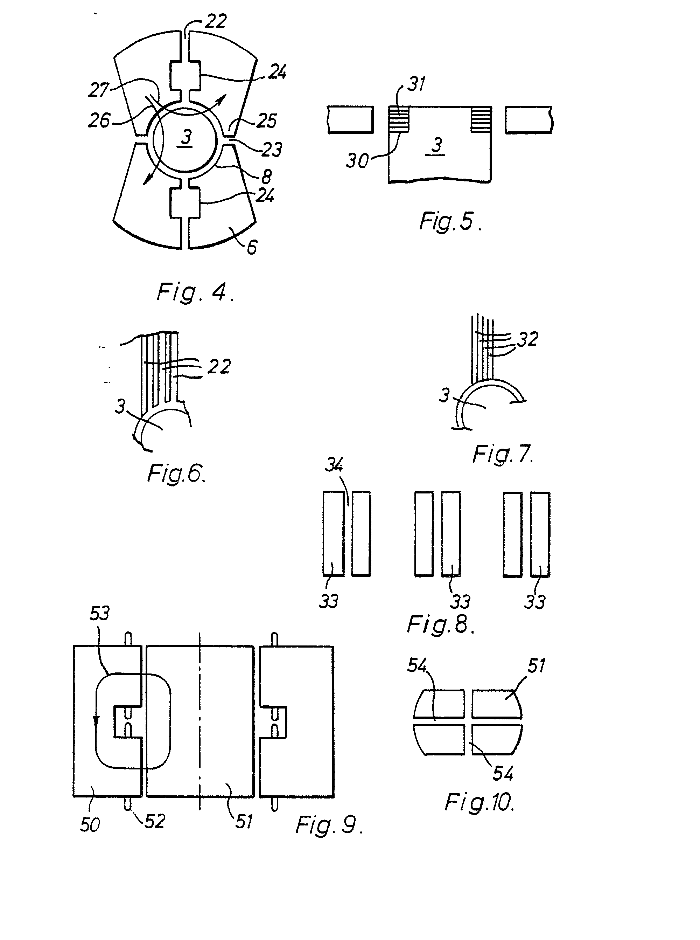

Figure 4 is a plan view of the rotor of a disc motor in accordance with this invention.  The rotor 6 has radial slots 22 and 23 extending along the axes of symmetry of the generally rectangular rotor.  It will be seen that the slot 22 provides an additional air gap at each rotor pole which provides an additional reluctance in the flux path 20 illustrated in Figure 3c and it will be further seen that the slot 23 provides an air gap increasing the reluctance of the flux path 21 shown in Figure 3d.

It will be seen that the desired flux driven by the d.c. winding which is from the rotor pole to the centre of the rotor 6 does not have its reluctance increased by the slots 22 and 23.

The slot 22 is, on each side of the central aperture 8, increased in width as indicated at 24 near to the aperture 8 but away from the edge of the rotor 6 to further increase the reluctance of the flux path illustrated in Figure 3c.  Further, the width of the rotor adjacent to the central aperture 8 is reduced in width as indicated at 25 to further increase the reluctance to the flux path illustrated in Figure 3d.

Two further flux paths, which are unnecessary will exist and these are indicated at 26 and 2y respectively. Flux path 26 is from one side of the rotor through the air gap between the rotor and the boss 3, through the boss 3, through the air gap between the boss 3 and the rotor 6 back to the other side of the rotor and this supplements flux path 21 illustrated in Figure 3d. Flux path 27 extends from one side of the rotor 6, through the air gap between the rotor and the boss 3, through the boss 3, through the air gap between the boss 3 and the rotor 6 to the rotor 6 on the same side of the central aperture 6 but on the other side of the slot 22 and this augments flux path 20 shown in Figure 3c. To increase the reluctance of these latter flux paths 26 and 27, it would be necessary to increase the air gap between the rotor 6 and the boss 3 i.e. reduce the size of the aperture and this would require an increased D.C. excitation. It is desirable to increase this air gap and at the same time reduce the air gap 7 which has the advantages that the overall excitation current would not need to be increased or could be reduced and the fringe flux shown in Figure 1b could be reduced.

The air gap flux between the rotor 6 and the central boss 3 is non-uniform and consequently rotation of the rotor 6 will produce eddy current and heating in the solid boss 3 which is of course undesirable. The boss 3 can be wholly laminated to prevent eddy currents. Figure 5, which is a partial view similar to Figure 2 but inverted, shows the end of the boss 3 having a reduced diameter providing a shoulder 30. Annular laminations 31 of the same material as the boss 3 are mounted on the shoulder 30 to provide the desired flux path but the presence of the laminations 31 will prevent eddy current.

It should be appreciated that the rotor shown in Figure 4 would have to be mounted, for mechanical reasons, on a support plate and this should be typically of nonmagnetic stainless steel for magnetic isolation of the rotor parts. Moreover, the number of slots 22 could be increased as shown in Figure 6 which show respectively an increase in the number of slots 22. Figure 7 shows the use of laminations 32; both these designs will increase the reluctance to the flux path 20.

Figure 8 illustrates the fixed track (rotor) of a linear synchronous machine in accordance with the invention. Each "rotor" bar 33 is slit transversely as shown at 34 and this will prevent the flux flowing in the direction equivalent flux bar 20 of Figure 3c and furthermore the bars 33 are built up of laminations having their surfaces parallel to the surface of the bars 33 as seen in Figure 8 increasing the reluctance of the flux path which is the equivalent of that shown in Figure 3d at 21.

A cylindrical machine in accordance with this invention is shown schematically in Figures 9 and 10 which show a stator 50, a rotor 51, and A.C. winding 52, and the desired flux path being 53. The rotor 51 is generally rectangular in cross-section. Axial slots 54 correspond to the slots 20 and 21 of Figure 4.

CLAIMS

1.    A homopolar synchronous machine having a stator, a rotor and primary side excitation, characterised in that a slot is formed in the rotor in a direction normal to the intended path through the rotor of the flux produced by the stator winding current.

2.    A homopolar synchronous machine according to claim 1, in the form of a disc machine and characterised by a stator (1) from which teeth (2) project axially, a central boss (3) projecting axially in the same direction as the teeth (2), the rotor (6) being generally rectangular and having a central aperture (8) and being mounted for rotation so that the boss (3) passes through the central aperture (8) and so that there is an air gap (7) between the rotor (6) and the teeth (2), an A.C. winding (4) wound through the slots between the teeth (2) and a D.C. winding (5) surrounding the central boss (3), the slot (22) being formed so as to extend from the central aperture (8) in the direction parallel to the longitudinal direction of the rotor (6).

3.    A synchronous machine according to claim 2, characterised in that a further slot (23) is formed in the rotor (6) transverse to the longitudinal direction of the bar-like rotor (6).

4.    A synchronous machine according to claim 2 or 3, characterised in that the slot (22) extending along the longitudinal direction of the rotor (6) is narrowed adjacent to the ends of the rotor (22).

5.    A synchronous machine according to any of claims 2 to 4, wherein the rotor (6) is narrowed in width in the vicinity of the central aperture (8).

0012555

6.    A synchronous machine according to claim 1, in the form of a cylindrical machine and characterised by a stator (50) from which axially offset teeth project radially inwards, an A.C. stator winding (52) and a rotor (51) which is generally rectangular in cross-section, the slot being an axial slot (54) which extends in the longitudinal direction of the rotor cross-section.

7.    A synchronous machine according to claim 6, characterised in that a further axial slot (54) extends transversely to the first mentioned slot (54).

8.    A synchronous machine as claimed in claim 1 in the form of a linear machine, and characterised by fixed rotor bars (33) split transversely to the direction of linear motion.

Fig.1A.

Fig.1B.

Fig. 2.

Fig. 3a.

Fig. 3b.

Fig.3c.

Fig. 3d.

Fig. 4.

Fig.5.

Fig.6.

Fig.7.

Fig.8.

Fig. 9.

Fig.10.

## DOCUMENTS CONSIDERED TO BE RELEVANT

| Category | Citation of document with indication, where appropriate, of relevant passages | Relevant to claim |
|---|---|---|
| | <u>GB - A - 1 167 805</u> (JARRET et al.)<br>* Page 2, lines 35-87; figures 1-3 * | 1-3 |
| | <u>FR - A - 1 572 206</u> (TELEMECANIQUE)<br>* Page 2, left-hand column, lines 10-32; figures 1,2 * | 1-3 |
| | <u>DE - C - 50 446</u> (MORDEY)<br>* Page 1, left-hand column, lines 6-29; page 1, right-hand column, lines 1-16; figures 1, 2 * | 1,6,7 |
| | <u>GB - A - 912 322</u> (ARCOS)<br>* Page 1, lines 82-88; page 2, lines 1-21; figures 1,2 * | 1,6,7 |
| D | <u>FR - A - 2 072 611</u> (ERNEST SCRAGG & SONS LTD.)<br>* Page 2, lines 24-40; page 3, lines 1-7; figures 1-3 * | 1,3,5-7 |
| | THE ENGINEER, vol. 231, no. 5995, 10th December 1970, pages 28-30 London, G.B.<br>"Is industry shying away from reluctance motors?"<br>* Page 30, left-hand column, lines 3-9; figure 6 * | 1,3,6,7 |
| | ./. | |

CLASSIFICATION OF THE
APPLICATION (Int. Cl. )

H 02 K 19/20
41/03

TECHNICAL FIELDS
SEARCHED (Int.Cl. )

H 02 K 19/20
19/24
19/06
19/10
21/38
21/40
21/42
41/03

CATEGORY OF
CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 04-03-1980 | TIO |

| European Patent Office | **EUROPEAN SEARCH REPORT** | |
|---|---|---|

## DOCUMENTS CONSIDERED TO BE RELEVANT

| Category | Citation of document with indication, where appropriate, of relevant passages | Relevant to claim |
|---|---|---|
| | DE - A - 1 638 445 (LICENTIA)<br>  * Page 3, lines 15-22; figures 1,2,5,6 *<br><br>-- | 1,4-6 |
| | FR - A - 1 592 065 (BARTHALON)<br>  * Page 11, right-hand column, lines 11-57; figure 20 *<br><br>---- | 1,8 |

**CLASSIFICATION OF THE APPLICATION (Int. Cl. 3)**

**TECHNICAL FIELDS SEARCHED (Int. Cl. 3)**